# EUROPÄISCHE PATENTSCHRIFT

(11) **EP 1 096 348 B1**
(45) Veröffentlichungstag und Bekanntmachung des Hinweises auf die Patenterteilung: **12.01.2005**
(21) Anmeldenummer: 99810986.2
(22) Anmeldetag: 01.11.1999
(51) Int. Cl.: G05B 19/418

(54) **Integration eines Feldleitgerätes in ein Anlagenleitsystem**
Integration of a field guidance device in a plant guidance system
Intégration d'un appareil de commande sur site dans un système de commande d'une installation

(43) Veröffentlichungstag der Anmeldung: 02.05.2001
(73) Patentinhaber: ABB RESEARCH LTD., 8050 Zürich (CH)
(72) Erfinder: Preiss, Otto, 5079 Zeihen (CH); Auf der Maur, Dominik, 5408 Ennetbaden (CH)
(74) Vertreter: ABB Patent Attorneys

(56) Entgegenhaltungen:
- WO-A-98/36353
- DE-A- 19 624 929
- ROESLER H -J: "DER FELDBUS WAECHST ZUM SYSTEMBUS. PROFIBUS-DP IN DER NEUEN SIMATICS7/M7" ELEKTRONIK,DE,FRANZIS VERLAG GMBH. MUNCHEN, Bd. 44, Nr. 21, 20. Oktober 1995 (1995-10-20), Seiten 52,54,61-66, XP000536319 ISSN: 0013-5658

## Beschreibung

### Technisches Gebiet

Die Erfindung bezieht sich auf das Gebiet der Anlagenleittechnik, insbesondere der Anlagenleittechnik für Hoch- Mittel- oder Niederspannungsschaltanlagen. Sie bezieht sich auf ein Verfahren und ein System zur Integration eines Feldleitgerätes in ein Anlagenleitsystem gemäss dem Oberbegriff der Patentansprüche 1 und 11.

### Stand der Technik

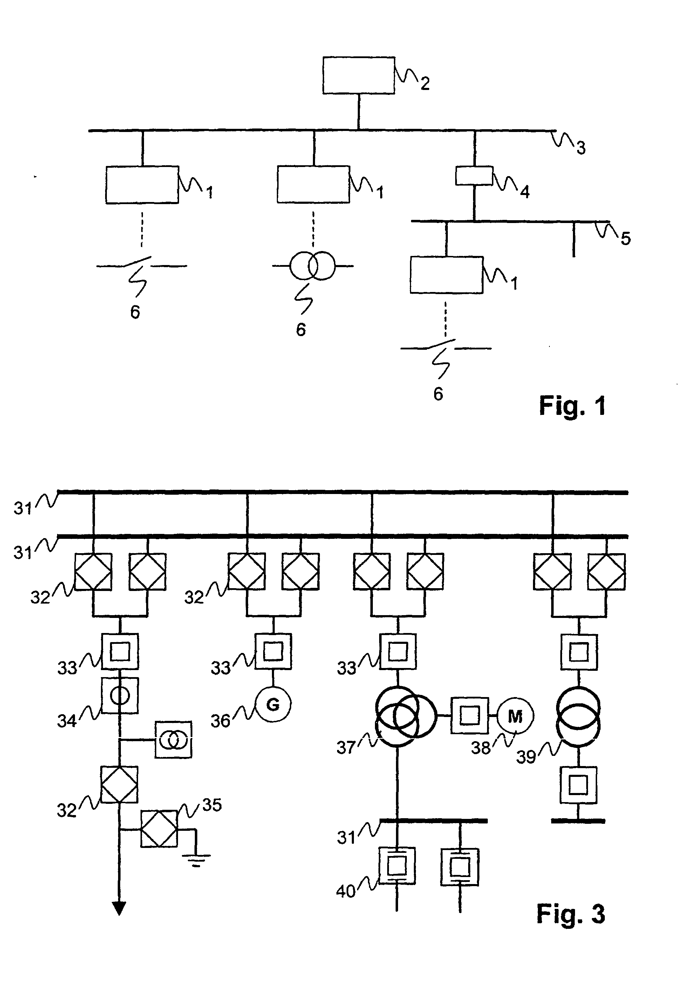

Eine Anlage, insbesondere eine Hoch- oder Mittelspannungsschaltanlage, wird durch ein verteiltes Anlagenleitsystem aus Feldleitgeräten, die über Kommunikationsbusse miteinander verbunden sind, gesteuert. Figur 1 zeigt schematisch eine Struktur eines Anlagenleitsystems mit Feldleitgeräten 1, einer Bedienstation 2, einem ersten und einem zweiten Kommunikationsbus 3,5 und einem Buskoppler 4. Die Feldgeräte 1 steuern, regeln, überwachen und schützen Primärgeräte 6 der Anlage, welche den eigentlichen Anlagenzweck erfüllen. Primärgeräte 6 sind beispielsweise Schalter, Antriebe, Generatoren oder Transformatoren. Der Buskoppler 4 verbindet Kommunikationsbusse 3,5, welche unterschiedliche Hardware- und/oder Protokoll-Eigenschaften aufweisen, so dass die Kommunikationsbusse 3,4,5 zusammen ein Kommunikationsnetzwerk 3,4,5 bilden. Das Kommunikationsnetzwerk 3,4,5 übermittelt Nachrichten zur Steuerung der Bedienstation 2 an die Feldleitgeräte 1 und Nachrichten der Feldleitgeräte 1 untereinander und an die Bedienstation 2, wo sie beispielsweise angezeigt oder gespeichert werden. Einem Feldleitgerät 1 ist in der Bedienstation 2 mindestens ein Programmelement oder eine Funktion zur Übermittlung dieser Nachrichten zugeordnet. Dieser Funktion muss bekannt sein, wie die Kommunikation zum Feldleitgerät 1 zu bewerkstelligen ist. Umgekehrt muss auch dem Feldleitgerät 1 bekannt sein, wie Nachrichten an die zugeordnete Funktion zu übermitteln sind.

Bei einer Beschreibung dieser Kommunikation wird unterschieden zwischen
- logischen Verbindungen, welche Sender, Empfänger und Art einer Nachricht beschreiben, und
- Kommunikationsparametern, welche beschreiben, wie die Übertragung geschieht.
Logische Verbindungen werden durch Geräteidentifikationen oder Netzwerkadressen spezifiziert. Kommunikationsparameter beinhalten Datentypen und Datenformate, die bei einem Aufruf von Funktionen benötigt werden. Solche Informationen über eine Kommunikationsverbindung werden im allgemein bekannten ISO/OSI Kommunikationsschichtenmodell auf einer Anwendungsschicht definiert.

Eine einzelne Nachricht über eine logische Verbindung zwischen einem Feldleitgerät 1 und einer zugeordeten Funktion übermittelt beispielsweise eine Stellung eines Schalters, der durch das Feldleitgerät 1 gesteuert wird, an eine optische Anzeige innerhalb eines Anlagendiagramms und/oder an eine Ereignisliste und/oder an eine Alarmfunktion der Bedienstation 2. Ein Standard zur Definition von Kommunikationsverbindungen für die Stationsleittechnik wird in einem Entwurf für einen IEC-Standard 61850 beschrieben. Eine Zusammenfassung findet sich in Vortragsunterlagen zu einem Workshop der VEW Energie AG vom 21.1.99, von Jochen Haude.

Bei einer Projektierung oder einem Engineering einer Anlage gemäss dem Stand der Technik werden zur Integration eines Feldleitgerätes 1 Gerätefunktionen des Feldleitgerätes 1 und Funktionen auf einer Bedienstation 2 ausgewählt, diese Funktionen einander zugeordnet, sowie logische Verbindungen und Kommunikationsparameter spezifiziert. Dies geschieht mittels Signallisten, in welchen textuell spezifiziert wird, welchen Funktionen der Bedienstation 2 eine bestimmte Nachricht oder ein bestimmtes Signal eines Feldleitgerätes 1 zugeordnet ist. Einträge für die Signallisten werden in einem ersten Schritt durch Projektierungswerkzeuge der einzelnen Feldleitgeräte 1 erzeugt, wobei Feldleitgeräte 1 für Schutzfunktionen und für Steuerfunktionen im Allgemeinen unterschiedliche Projektierungswerkzeuge aufweisen. In einem zweiten Schritt werden mit Hilfe eines Integrationswerkzeugs diese Einträge gesammelt und die Signale einander manuell zugeordnet. In einem dritten Schritt werden Spezifikationsdaten für die einzelnen Feldleitgeräte 1 und die Bedienstation 2 erzeugt, welche für jedes Signal resp. jede Nachricht eine Empfängeradresse entsprechend der Zuordnung angeben. Die erzeugten Spezifikationsdaten werden in Datelen gespeichert, welche je dem Feldleitgerät 1 und der Bedienstation 2 zugeordnet sind. Bei einer physischen Installation eines Feldleitgerätes 1 und einer Inbetriebnahme der Anlage werden diese Spezifikationsdaten im Feldleitgerät 1 und in der Bedienstation 2 geladen. Dadurch sind die entsprechenden Kommunikationsverbindungen erstellt, das heisst betriebsbereit.

Trotz der Verwendung spezieller Entwicklungswerkzeuge ist bei der Planung und bei der Inbetriebnahme jedoch ein grosser manueller Aufwand zur Spezifikation der Verbindungen und der Interaktionen zwischen Funktionen erforderlich. Auch ist dabei ein entsprechendes Fachwissen erforderlich, so dass bei der Planung wie bei der Inbetriebnahme zusätzlich zu Anlagenfachleuten auch Spezialisten für Leittechnik und Kommunikation benötigt werden. Aufgrund der manuellen Vorgänge und der Komplexität einer Anlage entstehen Fehler, welche einen erhöhten Inbetriebnahmeaufwand sowie Fehler im Betrieb verursachen. Nachträgliche Korrekturen der Anlage sind schwer durchzuführen und riskant.

Das Deutsche Patent DE 196 24 929 beschreibt ein Prozessautomatisierungssystem, beispielsweise zur Gebäudeautomatisierung, bei welchem während einer Initialisierungsphase modulspezifische Informationen von sogenannten Technologiemodulen übertragen werden. Im Weiteren wird die Erstellung einer Bedienoberfläche aus den modulspezifischen Informationen am Orte einer Bedieneinrichtung ins Auge gefasst.

### Darstellung der Erfindung

Es ist deshalb Aufgabe der Erfindung, ein Verfahren und ein System zur Integration eines Feldleitgerätes in ein Anlagenleitsystem der eingangs genannten Art zu schaffen, welche die oben genannten Nachteile beheben.

Diese Aufgabe lösen ein Verfahren und ein System zur Integration eines Feldleitgerätes in ein Anlagenleitsystem mit den Merkmalen der Patentansprüche 1 und 11.

Im erfindungsgemässen Verfahren zur Integration eines Feldleitgerätes in ein Anlagenleitsystem, welches ein Kommunikationsnetzwerk und eine Bedienstation aufweist
■ übermittelt das Feldleitgerät der Bedienstation eine Beschreibung seiner Gerätefunktionen in einer standardisierten Form,
■ werden dem Feldleitgerät zugeordnete Funktionen auf der Bedienstation installiert, und werden logische Kommunikationsverbindungen zwischen den Gerätefunktionen und den Funktionen der Bedienstation automatisch erstellt.

Gerätefunktionen werden also als Softwarekomponenten dargestellt, welche nicht nur ihre anlagenbetriebsorientierten Funktionen ausführen können, sondern auch Informationen über die Gerätefunktion selber und über eine Konfiguration der Gerätefunktion innerhalb des Anlagenleitsystems in standardisierter Form zur Verfügung stellen.

Somit werden also Kommunikationsverbindungen zwischen Feldleitgeräten und zugeordneten Funktionen der Bedienstation bei einer physischen Installation und Inbetriebnahme automatisch erstellt, ohne dass in einer vorangehenden Planungsphase entsprechende logische Verbindungen und Kommunikationsparameter spezifiziert werden müssen.

Ein Vorteil der Erfindung ist also, dass keine detaillierten logischen Verbindungen und Kommunikationsparameter von Hand spezifiziert werden müssen, und somit ein grosser Aufwand im Engineering entfällt. Ein weiterer Vorteil ist, dass ein wesentlicher Teil des Engineerings erst bei der physischen Installation und Inbetriebnahme stattfindet, und dass es deshalb nicht erforderlich ist, im voraus eine konsistente systemweite Beschreibung aller Kommunikationsverbindungen zu entwickeln und zu speichern. Ein weiterer Vorteil ist, dass somit ein Austausch von grösseren Datenmengen zwischen unterschiedlichen Engineeringswerkzeugen zur Konfiguration von Feldleitgeräten und der Bedienstation nicht notwendig ist. Auch sind keine Mechanismen zur Wahrung der Konsistenz dieser Daten erforderlich, und sind Fehler aufgrund inkonsistenter Daten grösstenteils eliminiert. Dadurch verringert sich der Aufwand bei der Inbetriebnahme und verbessert sich die Qualität einer resultierenden Anlagensteuerung.

In einer ersten bevorzugten Variante der Erfindung enthält die Bedienstation vor einer physischen Installation noch keine Informationen über eine Struktur der Anlage. Bei der physischen Installation eines Feldleitgerätes wird eine beispielsweise graphische Entsprechung oder Repräsentation des Feldleitgerätes in der Bedienstation erzeugt. Anhand von mehreren solchen Entsprechungen erzeugt ein Bediener auf der Bedienstation manuell eine Repräsentation der Struktur der Anlage.

In einer zweiten bevorzugten Variante der Erfindung enthält die Bedienstation Informationen über eine Struktur der Anlage, und wird ein Feldleitgerät bei der physischen Installation durch einen Bediener manuell einem Element der Anlagenstruktur zugeordnet.

In einer dritten bevorzugten Variante der Erfindung enthält die Bedienstation Informationen über die Struktur der Anlage, welche auch Identifikationen der Feldleitgeräte beinhaltet. Bei der physischen Installation eines Feldleitgerätes übermittelt dieses eine im Feldleitgerät gespeicherte Identifikation. Anhand dieser Identifikation werden automatisch die richtigen Kommunikationsverbindungen entsprechend der Struktur der Anlage erstellt.

Die durch das Feldleitgerät zur Verfügung gestellten Gerätefunktionen erlauben vorzugsweise einen Zugriff auf alle Daten, die zum Engineering und zur Konfiguration des Feldleitgerätes innerhalb des Anlagenleitsystems benötigt werden. Die auf der Bedienstation ausgeführten und einem Feldleitgerät zugeordneten Funktionen sind vorzugsweise Schnittstellenfunktionen zur Bedienung des Feldleitgerätes und zur Anzeige von Daten des Feldleitgeräts.

In einer bevorzugten Variante der Erfindung werden bestimmte Standardfunktionen und entsprechende logische Verbindungen in der Bedienstation automatisch installiert, ohne dass eine entsprechende Spezifikation in der Anlagenstruktur oder durch den Bediener vorliegen muss. Beispielsweise werden Alarmfunktionen und/oder Ereignisse erzeugende Gerätefunktionen automatisch mit entsprechenden, Alarme resp. Ereignisse verarbeitenden Funktionen der Bedienstation verbunden.

In einer vorteilhaften Variante der Erfindung sind generische Funktionen, die einem Feldleitgerät zuordnungsbar sind, in der Bedienstation schon vor der physischen Installation eines Feldleitgerätes enthalten. In einer anderen vorteilhaften Variante sind solche Funktionen im Feldleitgerät gespeichert und werden bei der physischen Installation des Feldleitgerätes der Bedienstation übermittelt. In einer weiteren vorteilhaften Variante sind solche Funktionen und/oder gerätespezifische Daten, wie beispielsweise eine Identifikation, nicht im Feldleitgerät selber gespeichert, sondern dem Feldleitgerät ist nur eine Adresse, beispielsweise eine URL (Uniform Resource Locator) zugeordnet, bei welcher diese Informationen abrufbar sind.

In einer bevorzugten Variante der Erfindung wird sie bei Hoch- oder Mittelspannungsschaltanlagen eingesetzt. In solchen Anlagen sind Interaktionen zwischen den Feldleitgeräten gering im Vergleich zu Interaktionen zwischen den Feldleitgeräten und der Bedienstation, so dass nebst der Anlagenstruktur nur wenig weitere Konfigurationsdaten notwendig sind. In dieser Variante wird vorteilhafterweise eine Beschreibungssprache für die Gerätekommunikation entsprechend dem IEC-Standard 61850-6 respektive seinem Entwurf verwendet.

Weitere bevorzugte Ausführungsformen gehen aus den abhängigen Patentansprüchen hervor.

### Kurze Beschreibung der Zeichnungen

Im folgenden wird die Erfindung anhand bevorzugter Ausführungsbeispiele, welche in den beiliegenden Zeichnungen dargestellt sind, näher erläutert. Es zeigen:
- Figur 1: schematisch eine Struktur eines Anlagenleitsystems;
- Figur 2: schematisch eine Struktur eines erfindungsgemässen Systems; und
- Figur 3: ein Einzelliniendiagramm einer Schaltanlage.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### Wege zur Ausführung der Erfindung

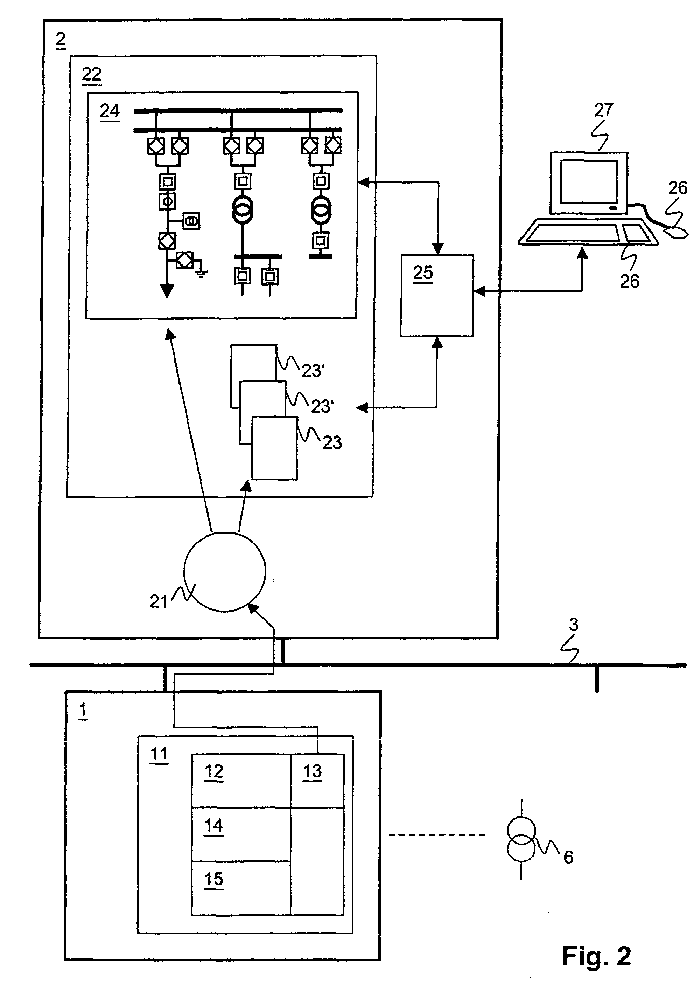

Figur 2 zeigt schematisch eine Struktur eines erfindungsgemässen Systems. Ein oder mehrere Feldleitgeräte 1 sind über ein Kommunikationsnetzwerk, welches aus einem oder mehreren Kommunikationsbussen 3,5 und Buskopplern 4 gebildet wird, mit mindestens einer Bedienstation 2 verbunden.

Feldleitgeräte 1 sind Leittechnik- oder Sekundärgeräte. Sie dienen der Steuerung, der Regelung und dem Schutz eines Primärgerätes 6. Primärgeräte 6 sind Geräte, welche eine eigentliche Funktion einer Anlage ausüben, beispielsweise Leistungsschalter, Trenner, Freileitungen, Transformatoren, Generatoren, Motoren, Turbinen, Pumpen etc.

Auf einem Feldleitgerät 1 ist mindestens eine Gerätefunktion 11 gespeichert und ausführbar. Die Gerätefunktion 11 besteht aus einer externen Schnittstelle 12 zur Kommunikation mit anderen Leittechnikgeräten, Algorithmen 14 zur Steuerung, Regelung, Überwachung und zum Schutz des Primärgerätes 6, sowie einer internen Schnittstelle 15 zur Ansteuerung des Primärgerätes 6. Erfindungsgemäss weist die Gerätefunktion 11 eine Funktionsbeschreibung 13 auf, welche die Gerätefunktion 11 selber sowie ihre Parameter beschreibt. Diese Beschreibung ist vorzugsweise gemäss dem Entwurf für den IEC-Standard 61850-6, respektive dem angenommenen Standard aufgebaut.

In einer Variante der Erfindung weist, entsprechend einem Objektmodell des Entwurfs der Norm IEC-61850-7, ein physikalisches Feldleitgerät eines oder mehrere logische Feldleitgeräte auf. Dabei entsprechen logische Feldleitgerate Feldleitgeräten 1, wie sie im folgenden Text verstanden werden.

Die Bedienstation 2 weist eine Engineeringapplikation 21 zur Integration von Feldleitgeräten 1 und zur Inbetriebnahme der Anlage auf, eine Anlagenreprasentation 22 mit Informationen über eine Struktur und Kommunikationsverbindungen der Anlage, und eine Ein/Ausgabeeinheit 25 zur Darstellung und zur Manipulation von Daten der Anlagenrepräsentation 22. Die Ein/Ausgabeeinheit 25 ist mit einer Anzeigeeinheit 27, beispielsweise einem Bildschirm, und einer Eingabeeinheit 26, beispielsweise einer Tastur und/oder einem Zeigegerät, verbunden.

In einer ersten bevorzugten Variante der Erfindung verläuft eine Integration eines Feldleitgerätes 1 wie folgt: Zu Beginn einer Installation von Feldleitgeraten 1 weist das Anlagenleitsystem das Kommunikationsnetzwerk 3,4,5 und die Bedienstation 2 auf, wobei die Anlagenstruktur 24 noch nicht in der Bedienstation 2 repräsentiert ist. Ein Feldleitgerät 1 wird an das Kommunikationsnetzwerk angeschlossen. Mittels eines Registrierdienstes (Registry Servers meldet sich das Feldleitgerät 1 seine Existenz beim Kommunikationsnetzwerk in allgemein bekannter Weise an, beispielsweise durch ein Broadcast oder Multicast-Verfahren: Dabei stellt das Netzwerk einen logischen Kanal zur Verfügung, auf dem jedes Gerät sein Vorhandensein, seine Netzwerkadresse und eine Identität senden kann. In einem Broadcast-Verfahren empfangen alle am Netzwerk angeschlossenen Geräte diese Informationen, in einem Multicast-Verfahren empfängt sie nur eine Untermenge von Geräten, in der vorliegenden Erfindung also die Bedienstation 2. Aufgrund der Anmeldung des Feldleitgerätes 1 sendet die Bedienstation 2 dem Feldleitgerät 1 eine Anfrage zur Übermittlung der Funktionsbeschreibung 13 des Gerätes, worauf das Gerät der Bedienstation 2 die Funktionsbeschreibung 13 übermittelt. Vorzugsweise ist diese Beschreibung gemäss einem IEC-Standard 61850-6 respektive seinem Entwurf aufgebaut. Dieser Standard beschreibt Definitionen von Kommunikationsverbindungen für die Stationsleittechnik. Er benutzt eine Betrachtungsweise und Terminologie gemäss einem "Client/Server"-Modell, in welchem Server Dienste oder Funktionen zur Verfügung stellen. Somit werden insbesondere Feldleitgeräte 1 als Server betrachtet, die ihre Gerätefunktionen 11 als Dienste zur Verfügung stellen. Die Gerätefunktionen 11 ermöglichen eine Steuerung eines Feldleitgerätes 1 durch ein anderes Gerät, beispielsweise durch eine übergeordete Bedienstation 2. Dazu werden die Dienste respektive Gerätefunktionen 11 durch Client-Programmelemente 23,23', die beispielsweise auf einer Bedienstation 2 ausgeführt werden, aufgerufen.

Der untenstehende, im folgenden erläuterte Text zeigt einen Inhalt einer Funktionsbeschreibung 13 von Gerätefunktionen 11 eines physikalischen Feldleitgerätes, welches zwei logische Feldleitgeräte aufweist. Die Zeilennummern sind nicht Teil der Beschreibung und wurden der Erläuterung hinzugefügt.

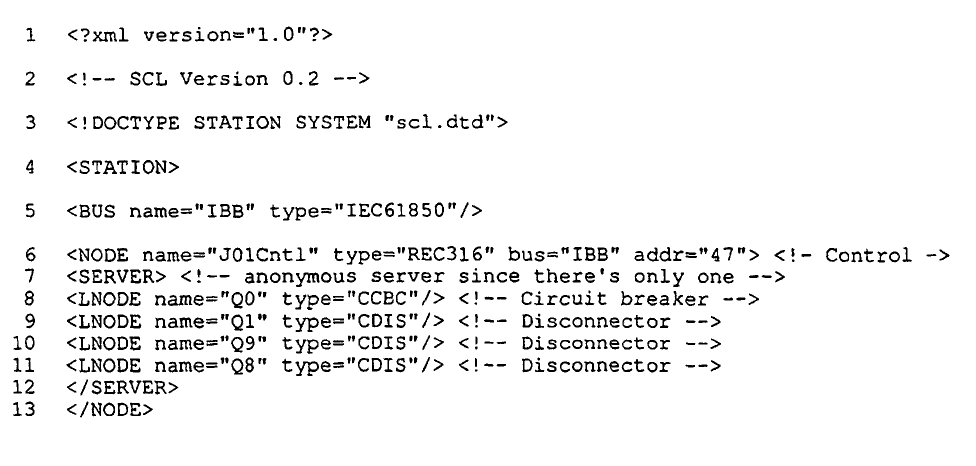

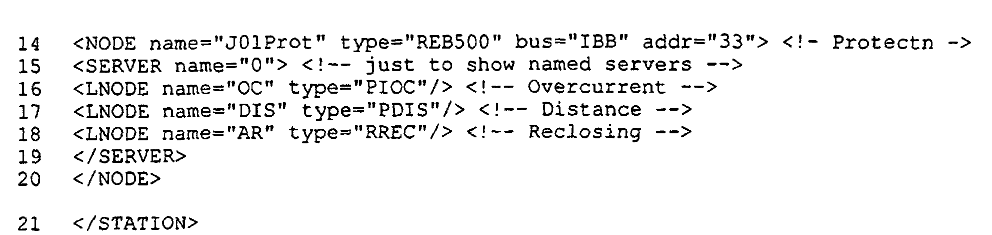

Die Zeilen spezifizieren jeweils das Folgende:
- Zeile 1:: eine verwendete Version von XML (Extended Modeling Language). Mittels der allgemein bekannten XML-Sprache ist eine Syntax der obenstehenden Beschreibung definiert.
- Zeile 2:: eine verwendete Version von SCL (Substation Configuration Language). Die im IEC-Standardentwurf 61850-6 beschriebene SCL-Sprache definiert eine Semantik oder Bedeutung von Ausdrücken der obenstehenden Beschreibung.
- Zeile 3:: einen Typ der Beschreibung.
- Zeile 4:: einen Beginn einer Beschreibung einer Station respektive eines Anlagenleitsystems.
- Zeile 5:: einen Typ eines Feldbusses, an den die Station angeschlossen ist.
- Zeile 6:: einen Beginn einer Beschreibung eines ersten logischen Feldleitgerätes der Station, mit insbesondere der Identifikation ("J01Cntl") und einer Kommunikationsadresse ("47").
- Zeile 7:: einen Beginn einer Beschreibung eines Servers, welcher Dienste oder Gerätefunktionen 11 des ersten logischen Feldleitgerätes zur Verfügung stellt. Da das erste logische Feldleitgerät nur einen Server aufweist, ist keine Spezifikation eines Namens erforderlich.
- Zeile 8:: einen Namen ("Q0") respektive eine Identifikation einer "logical node", welche einer Gerätefunktion 11 des (logischen) Feldleitgerätes entspricht. Ein Typ der Funktion ("CCBC") besagt, dass es sich um eine Ansteuerung eines Schalters handelt.
- Zeilen 9-11:: Namen respektive Identifikationen und Typen von Gerätefunktionen 11 zur Ansteuerung von Trennern.
- Zeile 12:: ein Ende der Beschreibung des Servers.
- Zeile 13:: ein Ende der Beschreibung des ersten logischen Feldleitgerätes.
- Zeilen 14-20:: eine analoge Beschreibung eines zweiten logischen Feldleitgerätes, welches Gerätefunktionen 11 zur Erfassung von Überströmen und für einen Distanzschutz, sowie Wiedereinschaltfunktionen zur Verfügung stellt. .
- Zeile 21:: ein Ende der Beschreibung der Station.

Anhand der Typen der Gerätefunktionen 11 ist der Bedienstation 2 bekannt, welche Dienste ("Services") diese Gerätefunktionen 11 zur Verfügung stellen und welche Datentypen sie benötigen. Dabei entsprechen die Dienste, Datentypen etc... vorzugsweise dem IEC-Standardentwurf 61850. Beispielsweise definiert der Standard für eine Gerätefunktion XCBR zur Ansteuerung eines Schalters, dass sie folgende Dienste aufweist
■ **ODSw** zur Steuerung des Schalters, vom Typ DPC.
■ **Pos** zum Ablesen des Schalterzustands, vom Typ DPS.
■ **MDD** zur Fehleranzeige " motor drive disturbance" , vom Typ SPS.
■ **SF6GasDen** zur Fehleranzeige "SF6 density waming ", vom Typ SPS. wobei die verwendeten Typen mit ihren Attributen
■ **DPC** double point control, mit Attributen für beispielsweise Art (Status, Messwert, Stellwert, Sollwert), Wert (Aktivieren, Deaktivieren, Ungültig, Undefiniert), Ausführungszeit, Dauer und Anzahl Wiederholungen von Steuerpulsen,
■ **DPS** double point status, mit Attributen für Art, Status (Wahr, Falsch, Zwischenwert, Ungültig), Qualität (Ungültig, Übertragungsfehler, Blockiert, Ersetzt, Overflow, etc...), Zeitstempel, und Beschreibungstext, sowie
■ **SPS** single point status, mit ähnlichen Attributen wie DPS,
sind.

Ebenso ist definiert, beispielsweise durch den Standard, welche Datentypen oder -Strukturen diese Dienste jeweils benötigen. Ein Aufruf eines Dienstes durch das Bediengerät 2 entspricht einer logischen Verbindung zwischen dem Bediengerät 2 und dem Feldleitgerät 1. Eine logische Verbindung wird durch Sender, Empfänger und Art einer Nachricht oder eines Dienstes beschrieben. Kommunikationsparameter einer Verbindung sind durch die Datentypen und Datenformate beschrieben.

Aufgrund dieser Funktionsbeschreibung 13 ist der Engineeringapplikation 21 nun bekannt, welche Gerätefunktionen 11 das neu angeschlossene Feldleitgerät 1 aufweist, was für logische Verbindungen entsprechend diesen Gerätefunktionen 11 zum Feldleitgerät 1 aufgebaut werden können, und welche Kommunikationsparameter diese logische Verbindungen aufweisen.

Die Engineeringapplikation 21 instantiiert anschliessend eine oder mehrere zugeordnete Funktionen der Bedienstation 23. Diese Funktionen der Bedienstation 23 werden beispielsweise durch Programmelemente, durch Datenstrukturen oder durch Objekte im Sinne einer objektorientierten Programmiermethodologie repräsentiert. Die Funktionen der Bedienstation 23 sind beispielsweise "Betätigen eines Schalters", "Lesen eines Zustands", "Plotten einer Trendkurve einer Messgrösse", "Eintrag in eine Ereignisliste", "Auslösen eines Alarms", etc.... Welche Arten von Funktionen der Bedienstation 23 einer bestimmten Gerätefunktionen 11 zugeordnet werden können, ist beispielsweise entsprechend dem zitierten Standard definiert. Vorzugsweise werden vorerst alle Funktionen oder aber eine vordefinierte Menge von Funktionen, die einer bestimmten Gerätefunktion 11 zugeordnet werden können, instantiiert. Gemäss dem Standard ist bekannt, welche Art von Primärgerät 6 der Gerätefunktion 11 zugeordnet ist. Eine softwaremässige Repräsentation dieses Primärgerätes 6, also eine Primärgeräterepräsentation, wird ebenfalls in der Anlagenrepräsentation 22 instantiiert.

Nach einer Anmeldung von einem oder mehreren Feldleitgeräten 1 liegt in der Anlagenrepräsentation 22 eine Menge von Primärgeräterepräsentationen und von Funktionen der Bedienstation 23 vor, die alle je einem bestimmten Feldleitgerät 1 respektive dessen Gerätefunktionen 11 zugeordnet sind. Die Anlagenrepräsentation 22 weist jedoch keine Information über die Anlagenstruktur auf. Diese Information wird nun durch einen Bediener spezifiziert. Dazu erzeugt die Ein/Ausgabeeinheit 25 auf der Anzeigeeinheit 27 eine vorzugsweise graphische Darstellung der Primärgeräterepräsentationen dar. In bekannter Weise baut der Benutzer mittels der Eingabeeinheit 26 aus den Primärgeräterepräsentationen interaktiv eine graphische Darstellung der Anlagenstruktur auf. Für diesen Vorgang benötigt der Bediener dabei Informationen, wo sich ein Primärgerät 6 respektive ein zugeordnetes Feldleitgerät 1 mit einer bestimmten Identifikation in der Anlage befindet. Die resultierende Darstellung wird als Anlagenstruktur 24 auf dem Rechner repräsentiert.

Eine solche Darstellung ist beispielsweise ein Einzelliniendiagramm, wie es in Figur 3 dargestellt ist. Das Einzelliniendiagramm zeigt Sammelschienen 31, Abtrennschalter 32, Schalter 33, einen Stromwandler 34, Spannungswandler 35, Generator 36, Dreiwindungstransformator 37, Motor 38, Zweiwindungstransformator 39 und Leistungsschalter mit Wagen (circuit breakers with truck) 40. Diese Primärgeräte werden in der graphischen Darstellung durch die gezeigten Symbole dargestellt.

Während der Erstellung der Anlagenstruktur 24 weist die Darstellung weitere, in der Figur 3 nicht gezeigte graphische Elemente auf, beispielsweise für Identifikationen von Primärgeräten 6, für Symbole und Identifikationen für Feldleitgeräte 1, und für Zuordnungen zwischen Primärgeräten 6 und Feldleitgeräten 1.

Gewisse Funktionen der Bedienstation 23 werden durch die Engineeringapplikation 21 aufgrund der Art der Funktion automatisch mit der Darstellung der zugeordneten Primärgeräterepräsentation in der Anlagenstruktur 24 verknüpft. In einem Betrieb der Anlage nach der Inbetriebnahme werden dann beispielsweise Funktionen zum Betätigen eines Schalters oder Funktionen zur Abfrage eines Zustands aufgerufen, indem in der Darstellung der Anlagenstruktur 24 die entsprechende Primärgeräterepräsentation angewählt wird.

Andere Funktionen der Bedienstation 23 werden aufgrund ihrer Art manuell und/oder automatisch durch die Engineeringapplikation 21 bestimmten Datenstrukturen oder bestimmten graphischen Elementen der Anzeige zugeordnet. Beispielsweise werden Funktion der Bedienstation 23, welche Ereignisse von Primärgeräten 6 empfangen, zusammengefasst, so dass die Ereignisse in eine gemeinsame Ereignisliste eingetragen werden. Oder es werden mehrere Alarmfunktionen zusammengefasst, so dass eine gemeinsame Alarmanzeige angesteuert wird.

Aufgrund der bekannten Netzwerkadresse des Feldleitgerätes 1 teilt die Engineeringapplikation 21 den Funktionen der Bedienstation 23 diese Adresse mit, und teilt dem Feldleitgerät 1 eine Adresse der zugeordneten Funktionen der Bedienstation 23 mit. Adressen werden beispielsweise durch Feldbusadressen oder durch Einträge in einer SCADA-Datenbank zur Verwaltung eines SCADA (Supervisory Control and Data Acquisition) Systems repräsentiert. Durch diese Verteilung von Adressen werden die Kommunikationsverbindungen zwischen Gerätefunktionen 11 und Funktionen der Bedienstation 23 konfiguriert. Die derart konfigurierten Funktionen werden im Feldleitgerät 1 respektive in der Bedienstation 2 installiert, das heisst, in einer ausführbaren Form gespeichert.

Falls notwendig, werden Kommunikationsverbindungen zwischen Feldleitgeräten 1 ebenfalls interaktiv und graphisch, aufgrund einer Darstellung der Funktionen der Bedienstation 23,23', spezifiziert. Eine solche Kommunikation zwischen Feldleitgeräten 1 ist beispielsweise in einer Schaltanlage für eine gegenseitige Verriegelung von Schaltern erforderlich. Für bestimmte übergeordnete Funktionen wie beispielsweise einen Sammelschienenschutz sind eigene Feldleitgeräte 1 vorgesehen, die keine wesentlichen Interaktionen mit anderen Feldleitgeräten 1 aufweisen. Dadurch sind in Schaltanlagen Interaktionen zwischen den Feldleitgeräten 1 gering im Vergleich zu Interaktionen zwischen den Feldleitgeräten 1 und der Bedienstation 2, so dass nebst der Anlagenstruktur 24 nur wenig weitere Konfigurationsdaten notwendig sind.

Durch die oben gezeigten Schritte wurde der grösste Teil der für den Betrieb der Anlage benötigten Leittechniksoftware der Bedienstation 2, das heisst, die logischen Verbindungen zwischen Gerätefunktionen 11 untereinander sowie zu Funktionen der Bedienstation 23 und zu einer graphischen Bedienerschnittstelle, mit einem minimalen manuellen Aufwand erstellt. Die erstellte Leittechniksoftware respektive ihre Funktionen werden für den Betrieb der Anlage auf der Bedienstation 2 installiert.

In einer zweiten bevorzugten Variante der Erfindung verläuft eine Integration eines Feldleitgerätes 1 wie in der ersten Variante, jedoch mit dem Unterschied, dass die Anlagenstruktur 24 bereits in einer rechnerlesbaren Form vorliegt. Anstelle einer interaktiven Spezifikation der Anlagenstruktur 24 verbleibt einem Bediener nur die Aufgabe, eine Primärgeräterepräsentation, die aufgrund eines angeschlossenen Feldleitgerätes 1 erzeugt wurde, einer Primargeräterepräsentation der Anlagenstruktur 24 zuzuordnen. Dies geschieht beispielsweise durch eine bekannte graphische "drag and drop" Zuordnung. Auch hier benötigt der Bediener die Informationen, wo sich ein Primargerät 6 respektive ein zugeordnetes Feldleitgerät 1 mit einer bestimmten Identifikation in der Anlage befindet.

In einer dritten bevorzugten Variante der Erfindung verläuft eine Integration eines Feldleitgerätes 1 wie in der zweiten Variante, wobei die Anlagenstruktur 24 nun auch Identifikationen der Primärgeräte 6 und/oder der Feldleitgeräte 1 beinhaltet. Dadurch wird die Zuordnung zu angeschlossenen Geräten automatisiert und entfallen die in den ersten beiden Varianten beschriebenen Schritte zur manuellen Spezifikation der Anlagenstruktur 24 respektive der Zuordnung von Primärgeräterepräsentationen.

In den oben beschriebenen Varianten der Erfindung sind Klassenbeschreibungen von Funktionen der Bedienstation 23, die als Vorlage für eine Instantiierung dienen, also generische Gerätefunktionen, die einem Feldleitgerät 1 zuordnungsbar sind, in der Bedienstation 2 schon vor der physischen Installation eines Feldleitgerätes 1 enthalten. In einer anderen vorteilhaften Variante sind solche generischen Gerätefunktionen im Feldleitgerät 1 gespeichert und werden bei der physischen Installation des Feldleitgerätes 1 der Bedienstation 2 übermittelt. Dies hat den Vorteil, dass die Bedienstation 2 vor einer Installation und Inbetriebnahme noch weniger a priori Information über eine Anlage und ihre Geräte benötigt. In einer weiteren vorteilhaften Variante sind gerätespezifische Gerätefunktionen 11 und/oder Daten wie beispielsweise eine Identifikation nicht im Feldleitgerät selber gespeichert, sondern ist dem Feldleitgerät nur eine Adresse, beispielsweise eine URL (Uniform Resource Locator) zugeordnet. Mittels dieser Adresse sind diese Informationen über das Kommunikationsnetzwerk oder beispielsweise über ein an das Kommunikationsnetzwerk angeschlossenes Netzwerk, welches über die Anlage hinausgeht, abrufbar.

Beim Betrieb der Anlage sind die Gerätefunktionen 11 und die Funktionen der Bedienstation 23 gemäss den bei der Inbetriebnahme vorliegenden oder manuell vorgenommenen Spezifikationen miteinander und mit einer interaktiven visuellen Darstellung der Anlagenstruktur 24 verbunden. Eine Steuerung und Koordination auf Anlagenebene wird also durch die Bedienstation 2 wahrgenommen. Die Engineeringapplikation 21 wird nicht mehr benötigt.

In den bisher beschriebenen Beispielen wird nur eine Bedienstation 2 erwähnt. Selbstverständlich kann auch die Kommunikation zu mehr als einer Bedienstation 2 eines Anlagenleitsystems gemäss der Erfindung erstellt werden. Dabei muss bekannt sein oder spezifiziert werden, welche Gerätefunktionen 11 einer bestimmten Bedienstation 2 zugeordnet sind.

In einer weiteren Variante der Erfindung läuft die Engineeringapplikation auf einem anderen Rechner als auf der im Betrieb verwendeten Bedienstation 2, wobei die beiden Rechner über das Kommunikationsnetzwerk (3,4,5) oder eine andere Schnittstelle miteinander kommunizieren.

In einer weiteren vorteilhaften Variante steuert ein Feldleitgerät 1 mehrere zusammengehörende Primärgeräte. Beispielsweise werden Schalter, Trenner und Transformatoren eines Schaltfeldes durch ein einziges physikalisches Feldleitgerät 1 gesteuert. Dabei weist das Feldleitgerät 1 mindestens je eine eigene Gerätefunktion 11 für jedes Primärgerät auf.

### Bezugszeichenliste

- 1: Feldleitgerät
- 2: Bedienstation
- 3: erster Kommunikationsbus
- 4: Buskoppler
- 5: zweiter Kommunikationsbus
- 6: Primärgerät
- 11: Gerätefunktion
- 12: Externe Schnittstelle
- 13: Funktionsbeschreibung
- 14: Algorithmus
- 15: Interne Schnittstelle
- 21: Engineeringapplikation
- 22: Anlagenrepräsentation
- 23,23': Funktion der Bedienstation
- 24: Anlagenstruktur
- 25: Darstellungseinheit
- 26: Eingabeeinheit
- 27: Anzeigeeinheit

## Patentansprüche

1. Verfahren zur Integration eines Feldleitgerätes (1) in ein Anlagenleitsystem, wobei das Anlagenleitsystem ein Kommunikationsnetzwerk (3,4,5) und eine Bedienstation (2) aufweist und das Feldleitgerät (1) gerätespezifische Informationen an die Bedienstation (2) übermittelt, **dadurch gekennzeichnet, dass**
a) die gerätespezifischen Informationen eine Funktionsbeschreibung (13) einer Gerätefunktion (11) des Feldleitgeräts (1) in einer standardisierten Form umfasst,
b) dem Feldleitgerät (1) zugeordnete Funktionen (23,23') auf der Bedienstation (2) installiert werden, und
c) Kommunikationsverbindungen zwischen den Gerätefunktionen (11) und den Funktionen der Bedienstation (23,23') konfiguriert werden.

2. Verfahren gemäss Anspruch 1, **dadurch gekennzeichnet, dass** die Bedienstation (2) vor einer Integration eines Feldleitgerätes (1) Informationen über eine Struktur der Anlage (24) enthält.

3. Verfahren gemäss Anspruch 2, **dadurch gekennzeichnet, dass** die Bedienstation (2) vor einer Integration eines Feldleitgerätes (1) Informationen über eine Identität des Feldleitgerätes (1) und/oder über eine Identität von Primärgeräten (6), welche dem Feldleitgerät (1) zugeordnet sind, enthält.

4. Verfahren gemäss Anspruch 1, **dadurch gekennzeichnet, dass** mindestens eine Funktion der Bedienstation (23,23') nach Massgabe der Art dieser Funktion (23,23') automatisch installiert wird.

5. Verfahren gemäss Anspruch 1, **dadurch gekennzeichnet, dass** die Funktionsbeschreibungen (13) des Feldleitgeräts (1) eine Beschreibungssprache entsprechend dem IEC-Standard 61850-6 oder seinem Entwurf verwendet.

6. Verfahren gemäss Anspruch 1, **dadurch gekennzeichnet, dass** generische Funktionen der Bedienstation (2), die einem Feldleitgerät (1) zuordnungsbar sind, vor der physischen Installation des Feldleitgerätes (1) in der Bedienstation (2) gespeichert werden.

7. Verfahren gemäss Anspruch 1, **dadurch gekennzeichnet, dass** Funktionen der Bedienstation (2), die einem Feldleitgerät (1) zuordnungsbar sind, bei der physischen Installation des Feldleitgerätes (1) durch das Feldleitgerät (1) der Bedienstation (2) übermittelt werden.

8. Verfahren gemäss Anspruch 1, **dadurch gekennzeichnet, dass** generische Funktionen der Bedienstation (2), die einem Feldleitgerät (1) zuordnungsbar sind, bei einer physischen Installation des Feldleitgerätes (1) der Bedienstation (2) anhand einer Adresse, insbesondere einer URL (Uniform Resource Locator), übermittelt werden

9. Verfahren gemäss Anspruch 1, **dadurch gekennzeichnet, dass** das Anlagenleitystem eine Hoch- oder Mittelspannungsschaltanlage steuert.

10. Verfahren gemäss Anspruch 1, **dadurch gekennzeichnet, dass** die Konfiguration einer Kommunikationsverbindung die Angabe von logischen Verbindungen wie Identifikationen und Adressen sowie von Kommunikationsparametern wie Datentypen und Datenformate umfasst.

11. Anlagenleitsystem, mit einer Bedienstation (2) und einem Kommunikationsnetzwerk (3,4,5) zur Kommunikation mit einem Feldleitgerät (1) sowie Mitteln zum Empfang von gerätespezifischen Informationen des Feldleitgeräts (1), **dadurch gekennzeichnet, dass** das Anlagenleitsystem
a) Mittel zum Empfang einer standardisierten Funktionsbeschreibung (13) von mindestens einer Gerätefunktion (11) des Feldleitgeräts (1),
b) Mittel zur Installation von Funktionen der Bedienstation (23,23'), welche der mindestens einen Gerätefunktion (11) des Feldleitgeräts (1) zugeordnet sind, und
c) Mittel zur Konfiguration von Kommunikationsverbindungen zwischen der mindestens einen Gerätefunktion (11) des Feldleitgerätes (1) und den Funktionen der Bedienstation (23,23')
aufweist.

12. Anlagenleitsystem gemäss Anspruch 11, **dadurch gekennzeichnet, dass** die Gerätefunktionen (11) des Feldleitgeräts (1) in einer Beschreibungssprache entsprechend dem IEC-Standard 61850-6 oder seinem Entwurf beschrieben sind.

## Claims

1. A method for integration of a field device (1) in an installation control system, wherein the installation control system has a communications network (3, 4, 5) and a control station (2) and wherein the field device (1) transmits device-specific information to the control station (2),
**characterized in that**
the device-specific information comprises
a) a functional description (13) of a device function (11) of the field device (1) in a standardized form, and **in that** the method comprises
b) installing functions (23, 23') associated with the field device (1) on the control station (2), and
c) configuring communications links between the device functions (11) and the functions of the control station (23, 23').

2. The method as claimed in claim 1, **characterized in that**, before integration of a field device (1), the control station (2) contains information about a structure of the installation (24).

3. The method as claimed in claim 2, **characterized in that**, before integration of a field device (1), the control station (2) contains information about an identity of the field device (1) and/or about an identity of primary units (6) which are associated with the field device (1).

4. The method as claimed in claim 1, **characterized in that** at least one function of the control station (23, 23') is installed automatically on the basis of the nature of this function (23, 23').

5. The method as claimed in claim 1, **characterized in that** the functional descriptions (13) of the field device (1) use a description language in accordance with IEC Standard 61850-6 or its draft.

6. The method as claimed in claim 1, **characterized in that** generic functions of the control station (2) which can be associated with a field device (1) are stored in the control station (2) before the physical installation of the field device (1).

7. The method as claimed in claim 1, **characterized in that** functions of the control station (2) which can be associated with a field device (1) are transmitted by the field device (1) to the control station (2) during the physical installation of the field device (1).

8. The method as claimed in claim 1, **characterized in that** generic functions of the control station (2) which can be associated with a field device (1) are transmitted to the control station (2) during physical installation of the field device (1) using an address, in particular a URL (Uniform Resource Locator).

9. The method as claimed in claim 1, **characterized in that** the installation control system controls a high-voltage or medium-voltage switchgear assembly.

10. The method as claimed in claim 1, **characterized in that** the configuration of communication links comprises the indication of logic links such as unit identifications or network addresses as well as communications parameters such as data types and data formats.

11. An installation control system which has a control station (2) and a communications network (3, 4, 5) for communication with a field device (1), as well as means for receiving device-specific information of the field device (1),
**characterized in that** the installation control system has
a) means for receiving a standardized functional description (13) of at least one device function (11) of the field device (1),
b) means for installation of functions of the control station (23, 23') which are associated with the at least one device function (11) of the field device (1), and
c) means for configuration of communications links between the at least one device function (11) of the field device (1) and the functions of the control station (23, 23').

12. The installation control system as claimed in claim 11, **characterized in that** the device functions (11) of the field device (1) are described in a description language in accordance with IEC Standard 61850-6 or its draft.

## Revendications

1. Procédé pour l'intégration d'un appareil de contrôle-commande de zone (1) dans un système de contrôle-commande d'installation, le système de contrôle-commande d'installation présentant un réseau de communication (3, 4, 5) et une station de commande (2) et l'appareil de contrôle-commande de zone (1) transmettant des informations spécifiques à l'appareil à la station de commande (2), **caractérisé en ce que**
a) les informations spécifiques à l'appareil comprennent une description de fonction (13) d'une fonction d'appareil (11) de l'appareil de contrôle-commande de zone (1) dans une forme standardisée,
b) des fonctions (23, 23') attribuées à l'appareil de contrôle-commande de zone (1) sont installées sur la station de commande (2), et
c) des liaisons de communication entre les fonctions d'appareil (11) et les fonctions de la station de commande (23, 23') sont configurées.

2. Procédé selon la revendication 1, **caractérisé en ce que** la station de commande (2) contient avant une intégration d'un appareil de contrôle-commande de zone (1) des informations sur une structure de l'installation (24).

3. Procédé selon la revendication 2, **caractérisé en ce que** la station de commande (2) contient avant une intégration d'un appareil de contrôle-commande de zone (1) des informations sur une identité de l'appareil de contrôle-commande (1) et/ou sur une identité d'appareils primaires (6) qui sont attribuées à l'appareil de contrôle-commande (1).

4. Procédé selon la revendication 1, **caractérisé en ce qu'**au moins une fonction de la station de commande (23, 23') est installée automatiquement en fonction de la nature de cette fonction (23, 23').

5. Procédé selon la revendication 1, **caractérisé en ce que** les descriptions de fonction (13) de l'appareil de contrôle-commande (1) utilisent un langage de description en fonction du standard de CEI 61850-6 ou son projet.

6. Procédé selon la revendication 1, **caractérisé en ce que** des fonctions génériques de la station de commande (2), qui peuvent être attribuées à un appareil de contrôle-commande de zone (1), sont mémorisées dans la station de commande (2) avant l'installation physique de l'appareil de contrôle-commande de zone (1).

7. Procédé selon la revendication 1, **caractérisé en ce que** des fonctions de l'appareil de commande (2), qui peuvent être attribuées à un appareil de contrôle-commande de zone (1), sont transmises lors de l'installation physique de l'appareil de contrôle-commande de zone (1) par l'appareil de contrôle-commande de zone (1) à la station de commande (2).

8. Procédé selon la revendication 1, **caractérisé en ce que** des fonctions génériques de la station de commande (2), qui peuvent être attribuées à un appareil de contrôle-commande de zone (1), sont transmises lors d'une installation physique de l'appareil de contrôle-commande de zone (1) à la station de commande (2) à l'aide d'une adresse, en particulier une URL (Uniform Resource Locator).

9. Procédé selon la revendication 1, **caractérisé en ce que** le système de contrôle-commande d'installation commande une installation de commutation à haute ou à moyenne tension.

10. Procédé selon la revendication 1, **caractérisé en ce que** la configuration d'une liaison de communication comprend l'indication de liaisons logiques comme des identifications et des adresses ainsi que de paramètres de communication comme des types de données et des formats de données.

11. Système de contrôle-commande d'installation comprenant une station de commande (2) et un réseau de communication (3, 4, 5) pour la communication avec un appareil de contrôle-commande de zone (1) et des moyens pour la réception d'informations spécifiques aux appareils de l'appareil de contrôle-commande de zone (1),
**caractérisé en ce que** le système de contrôle-commande d'installation présente
a) des moyens pour la réception d'une description de fonction (13) standardisée d'au moins une fonction d'appareil (11) de l'appareil de contrôle-commande (1),
b) des moyens pour l'installation de fonctions de la station de commande (23, 23'), qui sont attribuées à au moins une fonction d'appareil (11) de l'appareil de contrôle-commande de zone (1), et
c) des moyens pour la configuration de liaisons de communication entre la au moins une fonction d'appareil (11) de l'appareil de contrôle-commande de zone (1) et les fonctions de la station de commande (23, 23').

12. Système de contrôle-commande d'installation selon la revendication 11, **caractérisé en ce que** les fonctions d'appareil (11) de l'appareil de contrôle-commande de zone (1) sont décrites dans un langage de description selon le standard de CEI 61850-6 ou son projet.
